(19) Europäisches Patentamt
European Patent Office
Office européen des brevets

(11) **EP 3 640 459 B1**

(12) **EUROPÄISCHE PATENTSCHRIFT**

(45) Veröffentlichungstag und Bekanntmachung des Hinweises auf die Patenterteilung:
**02.06.2021   Patentblatt 2021/22**

(51) Int Cl.:
*F02D 31/00* *(2006.01)*      *F01N 3/20* *(2006.01)*
*F02D 41/04* *(2006.01)*      *F01N 9/00* *(2006.01)*
*F02D 41/02* *(2006.01)*      *F16H 59/74* *(2006.01)*

(21) Anmeldenummer: **19198345.1**

(22) Anmeldetag: **19.09.2019**

(54) **VERFAHREN ZUM BETREIBEN EINES VERBRENNUNGSMOTORS MIT EINER ABGASNACHBEHANDLUNGSEINRICHTUNG**

METHOD FOR OPERATING A COMBUSTION ENGINE WITH AN EXHAUST GAS TREATMENT DEVICE

PROCÉDÉ DE FONCTIONNEMENT D'UN MOTEUR À COMBUSTION INTERNE DOTÉ D'UN DISPOSITIF DE TRAITEMENT DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2018   DE 102018216366**

(43) Veröffentlichungstag der Anmeldung:
**22.04.2020   Patentblatt 2020/17**

(73) Patentinhaber: **Deere & Company**
**Moline, IL 61265 (US)**

(72) Erfinder: **Billich, Manuel**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 3 106 638          EP-A2- 1 247 968**
**US-A1- 2013 152 549     US-B1- 7 063 642**

EP 3 640 459 B1

**Beschreibung**

Die Erfindung bezieht sich auf ein Verfahren zum Betreiben eines Verbrennungsmotors mit einer Abgasnachbehandlungseinrichtung.

Um den Schadstoffausstoß dieselbetriebener Verbrennungsmotoren zu verringern, weisen moderne Landmaschinen im Allgemeinen eine aus einem Rußpartikelfilter sowie einem SCR-Katalysator (SCR - Selective Catalytic Reduction) bestehende Abgasnachbehandlungseinrichtung auf. Der SCR-Katalysator dient hierbei der katalytischen Reduktion von im Abgas enthaltenen Stickoxiden. Als Reduktionsmittel wird eine in den Abgasstrom eingespritzte wässrige Harnstofflösung (DEF - Diesel Exhaust Fluid) verwendet. Das Verbrauchsverhältnis zwischen Dieselkraftstoff und Harnstofflösung hängt letztlich vom Betriebpunkt des Verbrennungsmotors ab und ist für den Fahrer hinsichtlich der verursachten Verbrauchskosten nicht ohne Weiteres einschätzbar

Aus der EP 3 106 638 A1 ist für einen Schiffsantrieb bekannt, eine Motorbetriebspunktsteuerung zur Bereitstellung einer angeforderten Leistung mit minimalen Betriebsmittelkosten an Kraftstoff und Reduktionsmittel auszuführen. Aus der US 7 063 642 B1 ist eine Betriebspunkteinstellung für ein Fahrzeug mit CVT-Getriebe bekannt, wobei eine Betriebsmittelkostenminimierung angestrebt ist. Aus der US 2013/152549 A1 ist bekannt einen Automobilmotorbetrieb mit spezifischer Betriebskostenoptimierung basierend auf einem Kraftstoff-Harnstoff-Kostenverhältnis zu steuern.

Es ist daher Aufgabe der vorliegenden Erfindung, ein Verfahren der eingangs genannten Art dahingehend anzugeben, dass ein kostenoptimierter Betrieb des Verbrennungsmotors unterstützt wird.

Diese Aufgabe wird durch ein Verfahren mit den Merkmalen des Patentanspruchs 1 gelöst.

Das erfindungsgemäße Verfahren zum Betreiben eines Verbrennungsmotors mit einer Abgasnachbehandlungseinrichtung sieht vor, dass

(a) in einem ersten Schritt einem Kontrollsystem eine für den Betrieb des Verbrennungsmotors vorgegebene Reduktionsmittel-Kraftstoff-Verbrauchsgewichtung $q_{FD}$ mitgeteilt wird, wobei die Reduktionsmittel-Kraftstoff-Verbrauchsgewichtung $q_{FD}$ über eine mit dem Kontrollsystem kommunizierende Bedieneinheit vorgegeben wird,

(b) in einem zweiten Schritt von dem Kontrollsystem ausgehend von der vorgegebenen Reduktionsmittel-Kraftstoff-Verbrauchsgewichtung $q_{FD}$ ein Vektorfeld korrespondierender Motorbetriebspunkte $(n_{Eng}^i,\ M_{Eng}^i)$ ermittelt wird, um für jeden der Motorbetriebspunkte $(n_{Eng}^i,\ M_{Eng}^i)$ einen spezifischen Reduktionsmittel-Kraftstoff-Verbrauch $BSFC^i$ abzuleiten,

$$BSFC^i = \frac{\dot{m}_{Fuel}^i + \dot{m}_{DEF}^i \cdot q_{FD}}{P_{out}}\ ,$$

wobei $\dot{m}_{Fuel}^i$ die Kraftstoff-Verbrauchsrate und $\dot{m}_{DEF}^i$ die Reduktionsmittel-Verbrauchsrate jeweils für den i-ten Motorbetriebspunkt, $q_{FD}$ die vorgegebene Reduktionsmittel-Kraftstoff-Verbrauchsgewichtung sowie $P_{out}$ eine momentane Getriebeausgangsleistung wiedergibt, und

(c) in einem dritten Schritt von dem Kontrollsystem aus dem ermittelten Vektorfeld dasjenige Element $i^{Set}$ als Zielmotorbetriebspunkt $(n_{Eng}^{Set},\ M_{Eng}^{Set})$ ausgewählt wird, dem ein minimaler spezifischer Reduktionsmittel-Kraftstoff-Verbrauch $BSFC^{Set}$ entspricht, wobei von dem Kontrollsystem nach Maßgabe des ausgewählten Elements $i^{Set}$ eine Zielmotordrehzahl $n_{Eng}^{Set}$ sowie daraus unter Berücksichtigung einer momentanen Getriebeausgangsdrehzahl $n_{out}$ eine Zielgetriebeübersetzung $r^{Set}$ vorgegeben wird.

Auf diese Weise ist es möglich, die Motordrehzahl sowie die Getriebeübersetzung unter Berücksichtigung der aktuellen Kraftstoff- bzw. Reduktionsmittelpreise im Sinne eines kostenoptimierten Verbrauchsverhältnisses anzupassen.

Der Verbrennungsmotor ist üblicherweise dieselbetrieben, sodass es sich bei dem verwendeten Kraftstoff um einen Dieselkraftstoff und bei dem Reduktionsmittel um eine wässrige Harnstofflösung, beispielsweise AU32, handelt.

Das erfindungsgemäße Verfahren kann insbesondere bei mobilen Fahrzeugsystemen aus dem Nutzfahrzeugbereich Verwendung finden. Hierzu gehören unter anderem Land-, Forst- oder Baumaschinen beliebiger Bauart.

Vorteilhafte Ausgestaltungen des erfindungsgemäßen Verfahrens gehen aus den Unteransprüchen hervor.

Vorzugsweise ist die Reduktionsmittel-Kraftstoff-Verbrauchsgewichtung $q_{FD}$ definiert als Verhältnis der Verbrauchsraten $\dot{m}_{DEF}$ und $\dot{m}_{Fuel}$ von Reduktionsmittel und Kraftstoff,

$$q_{FD} = \frac{\dot{m}_{DEF}}{\dot{m}_{Fuel}} \quad .$$

Hierbei können von dem Kontrollsystem mehrere feste Reduktionsmittel-Kraftstoff-Verbrauchsgewichtungen $q_{FD}$ zur Auswahl über die Bedieneinheit vorgegeben werden. Insbesondere kann eine Auswahl zwischen drei verschiedenen Werten vorgesehen sein:

$$q_{FD} = 0{:}1 \ , \ 1{:}1 \ , \ 1{:}3$$

Bei einer Gewichtung von *0:1* findet zur Ableitung des spezifischen Reduktionsmittel-Kraftstoff-Verbrauchs BSFC[i] ausschließlich ein Verbrauch von Kraftstoff, nicht jedoch von Reduktionsmittel Berücksichtigung, wohingegen im Falle einer Gewichtung von *1:1* ein Verbrauch von Reduktionsmittel und Kraftstoff zu gleichen Teilen angesetzt wird. Ein Wert von *1:3* entspricht ferner einer Gewichtung, bei der ein preislich äquivalenter Verbrauch von Reduktionsmittel und Kraftstoff vorliegt, nämlich unter der gängigen Annahme, dass das Reduktionsmittel ungefähr dreimal so teuer ist wie die gleiche Menge Kraftstoff. Durch Vorgabe einer überschaubaren Anzahl fester Werte für die Reduktionsmittel-Kraftstoff-Verbrauchsgewichtung $q_{FD}$ wird die Auswahl für den Fahrer wesentlich vereinfacht. Alternativ ist bei entsprechend erfahrenen Fahrern jedoch auch eine freie Vorgabe vorstellbar.

Zur Ermittlung des Vektorfelds kann von dem Kontrollsystem zunächst für einen zulässigen Motordrehzahlbereich $\left[ n_{Eng}^{min}, n_{Eng}^{max} \right]$ ein Motordrehzahlvektor $\vec{n}_{Eng}$ bestimmt werden.

Handelt es sich bei der Getriebeeinheit um ein stufenloses Getriebe, kann dies unter Annahme von *N* möglichen Werten für die Motordrehzahl erfolgen,

$$\vec{n}_{Eng} = \left( n_{Eng}^{min}, \ n_{Eng}^{min} + \Delta n \cdot i \ ,..., \ n_{Eng}^{max} \right) \cap \Delta n = \frac{n_{Eng}^{max} - n_{Eng}^{min}}{N} \ \forall \ i = 1 \ldots N \quad .$$

Dies trägt dem Umstand Rechnung, dass die Beeinflussung der Motordrehzahl seitens eines Motorsteuergeräts im Allgemeinen nicht kontinuierlich, sondern in diskreten Drehzahlschritten erfolgt. Die Anzahl *N* bzw. Breite *Δn* der Drehzahlschritte wird dabei letztlich durch die Rechenkapazität des verwendeten Motorsteuergeräts nach oben bzw. unten hin begrenzt.

Ist hingegen ein Schaltgetriebe mit wenigstens zwei Getriebeübersetzungen vorgesehen, so bietet es sich an, den Motordrehzahlvektor $\vec{n}_{Eng}$ aus den zur Verfügung stehenden Getriebeübersetzungen $r_T^i$ des Schaltgetriebes abzuleiten. In Komponentenschreibweise lautet dieser für die *i*-te Getriebeübersetzung

$$n_{Eng}^i = n_{out} r_T^i \ ,$$

wobei $n_{out}$ die momentane Getriebeausgangsdrehzahl darstellt. Letztere lässt sich beispielsweise mittels eines Getriebedrehzahlsensors erfassen.

Ausgehend von einem vereinfachten Ansatz kann die momentane Getriebeausgangsleistung $P_{out}$ unmittelbar aus einer von dem Verbrennungsmotor bereitgestellten momentanen Motorausgangsleistung $P_{Eng}$ abgeleitet werden,

$$P_{Out} = P_{Eng} \quad .$$

Die momentane Motorausgangsleistung $P_{Eng}$ ergibt sich hierbei zu

$$P_{Eng} = M_{Eng} \frac{\pi}{30} n_{Eng} \ ,$$

wobei $M_{Eng}$ das momentane Motordrehmoment und $n_{Eng}$ die momentane Motordrehzahl ist. Die momentane Motordrehzahl $n_{Eng}$ lässt sich mittels eines Motordrehzahlsensors ermitteln, wohingegen das momentane Motordrehmoment $M_{Eng}$ seitens des Motorsteuergeräts basierend auf der Einspritzmenge zur Verfügung gestellt wird. Alternativ kann zu diesem Zweck jedoch auch ein Drehmomentsensor vorgesehen sein.

Damit ergibt sich für den mit dem Motordrehzahlvektor $\vec{n}_{Eng}$ korrespondierenden Motordrehmomentvektor $\vec{M}_{Eng}$ in Komponentenschreibweise

$$M_{Eng}^i \;=\; \frac{P_{out}}{\frac{\pi}{30}\, n_{Eng}^i} \quad .$$

Andererseits sind die Verbrauchsraten $\dot{m}_{DEF}$ und $\dot{m}_{Fuel}$ von Reduktionsmittel und Kraftstoff in jedem der möglichen Motorbetriebspunkte ($n_{Eng}$, $M_{Eng}$) des Verbrennungsmotors bekannt,

$$\dot{m}_{DEF} = f\left\{ n_{Eng},\, M_{Eng} \right\} \quad ,$$

$$\dot{m}_{Fuel} = f\left\{ n_{Eng},\, M_{Eng} \right\} \quad .$$

Diese sind in Gestalt entsprechender Tabellen in einer dem Kontrollsystem zugeordneten Speichereinheit hinterlegt und erlauben umgekehrt die Ableitung des im i-ten Motorbetriebspunkt $( n_{Eng}^i,\; M_{Eng}^i )$ vorliegenden spezifischen Reduktionsmittel-Kraftstoff-Verbrauchs $BSFC^i$.

Die entsprechend dem minimalen spezifischen Reduktionsmittel-Kraftstoff-Verbrauch $BSFC^{Set}$ vorgegebene Zielmotordrehzahl $n_{Eng}^{Set}$ und/oder Zielgetriebeübersetzung $r^{Set}$ kann anschließend von dem Kontrollsystem am Verbrennungsmotor und/oder an der Getriebeeinheit eingesteuert werden. Dies kann selbsttätig, gegebenenfalls auch nach vorheriger Bestätigung bzw. Freigabe durch den Fahrer über die Bedieneinheit erfolgen.

Um einen von Antriebskrafteinbrüchen freien Betrieb des Verbrennungsmotors sicherzustellen, besteht die Möglichkeit, dass das Vektorfeld von dem Kontrollsystem bezüglich solcher Motorbetriebspunkte $( n_{Eng}^i,\; M_{Eng}^i )$, die außerhalb des Drehmomentpotentials des Verbrennungsmotors liegen, bereinigt wird, wobei die Auswahl des dem minimalen spezifischen Reduktionsmittel-Kraftstoff-Verbrauch $BSFC^{Set}$ entsprechenden Elements $i^{Set}$ von dem Kontrollsystem auf Grundlage des bereinigten Vektorfelds durchgeführt wird.

Des Weiteren ist es möglich, dass von dem Kontrollsystem ein aktueller spezifischer Reduktionsmittel-Kraftstoff-Verbrauch $BSFC^C$ ermittelt wird, wobei eine Einsteuerung der Zielmotordrehzahl $n_{Eng}^{Set}$ und/oder Zielgetriebeübersetzung $r^{Set}$ nur dann erfolgt, wenn dem Kontrollsystem feststellt, dass der aktuelle spezifische Reduktionsmittel-Kraftstoff-Verbrauch $BSFC^C$ den minimalen spezifischen Reduktionsmittel-Kraftstoff-Verbrauch $BSFC^{Set}$ um eine vorgegebene Verbrauchsdifferenz $\Delta_{ESFC}$ übersteigt,

$$BSFC^C - BSFC^{iSet} > \Delta_{BSFC} \quad ,$$

mit

$$BSFC^C = \frac{\dot{m}_{Fuel}^C + \dot{m}_{DEF}^C \cdot q_{FD}}{P_{out}} \quad ,$$

wobei $\dot{m}_{Fuel}$ und $\dot{m}_{DEF}$ die auf den momentanen Motorbetriebspunkt ($n_{Eng}$, $M_{Eng}$) bezogenen Verbrauchsraten von Kraftstoff und Reduktionsmittel darstellen.

Durch entsprechende Vorgabe der Verbrauchsdifferenz $\Delta_{BSFC}$ lassen sich überflüssige korrigierende Eingriffe in die Motordrehzahl bzw. die Getriebeübersetzung aufgrund lediglich geringfügiger Variationen des aktuellen spezifischen Reduktionsmittel-Kraftstoff-Verbrauchs $BSFC^C$ vermeiden. Das Verbrauchs- bzw. Betriebsverhalten des Verbrennungsmotors bzw. der Getriebeeinheit wird so maßgeblich verbessert.

In diesem Zusammenhang kann auch vorgesehen sein, dass von dem Kontrollsystem eine aktuelle Motorleistungsreserve $P_{Res}^C$ für den momentanen Motorbetriebspunkt ($n_{Eng}$, $M_{Eng}$) und eine dem Zielmotorbetriebspunkt ($n_{Eng}^{Set}$, $M_{Eng}^{Set}$) entsprechende Zielmotorleistungsreserve $P_{Res}^{Set}$ berechnet wird, wobei eine Einsteuerung der Zielmotordrehzahl $n_{Eng}^{Set}$ und/oder Zielgetriebeübersetzung $r^{Set}$ nur dann erfolgt, wenn die Zielmotorleistungsreserve $P_{Res}^{Set}$ die aktuelle Motorleistungsreserve $P_{Res}^C$ um eine vorgegebene Leistungsdifferenz $\Delta_P$ übersteigt,

$$P_{Res}^{Set} - P_{Res}^C > \Delta_P \ ,$$

mit

$$P_{Res}^C = \left( M_{Eng}^{Max}\{n_{Eng}\} - M_{Eng} \right) \frac{\pi}{30} n_{Eng} \ ,$$

$$P_{Res}^{Set} = \left( M_{Eng}^{Max}\{n_{Eng}^{Set}\} - M_{Eng}^{Set} \right) \frac{\pi}{30} n_{Eng}^{Set} \ ,$$

wobei $M_{Eng}^{Max}\{n_{Eng}\}$ bzw. $M_{Eng}^{Max}\{n_{Eng}^{Set}\}$ das maximale Drehmomentpotential des Verbrennungsmotors bei der Motordrehzahl $n_{Eng}$ bzw. $n_{Eng}^{Set}$ wiedergibt.

Somit erfolgt ein korrigierender Eingriff in die Motordrehzahl bzw. die Getriebeübersetzung seitens des Kontrollsystems nur dann, wenn dieser hinsichtlich der erzielbaren Leistungsausbeute zu einem merklichen Nutzen führt.

Des Weiteren können zur genauen Bestimmung der momentanen Getriebeausgangsleistung $P_{out}$ innerhalb der Getriebeeinheit auftretende Leistungsverluste berücksichtigt werden, indem der ermittelte minimale spezifische Reduktionsmittel-Kraftstoff-Verbrauch $BSFC^{Set}$ von dem Kontrollsystem in Abhängigkeit eines für die Getriebeeinheit ermittelten Wirkungsgrads $\eta_T^F$ bzw. $\eta_T^R$ korrigiert wird, wobei sich dieser als Funktion einer momentanen Getriebeeingangsleistung $P_{in}$ bzw. der momentanen Getriebeausgangsleistung $P_{out}$ sowie der momentanen Motordrehzahl $n_{Eng}$ und der momentanen Getriebeübersetzung $r_T$ ergibt,

$$\eta_T^F = f_T^F\{n_{Eng}, P_{in}, r_T\} \ ,$$

$$\eta_T^R = f_T^R\{n_{Eng}, P_{out}, r_T\} \ .$$

Die Funktionen $f_T^F$ bzw. $f_T^R$ sind hierbei in Form entsprechender Tabellen in der dem Kontrollsystem zugeordneten Speichereinheit hinterlegt.

Die Genauigkeit bei der Bestimmung der momentanen Getriebeausgangsleistung $P_{out}$ lässt sich weiter erhöhen, wenn der ermittelte minimale spezifische Reduktionsmittel-Kraftstoff-Verbrauch $BSFC^{Set}$ von dem Kontrollsystem in Abhängigkeit eines Drehmomentanteils $M_{loss}$, der auf einen Leistungsbedarf von mittels des Verbrennungsmotors angetriebenen Nebenaggregaten zurückgeht, korrigiert wird. Zu diesen Nebenaggregaten gehören unter anderem elektrische Generatoren, Hydraulikpumpen, Lüfteraggregate, und dergleichen. Der entsprechende Drehmomentanteil ist hierbei in erster Näherung eine Funktion der momentanen Motordrehzahl $n_{Eng}$,

$$M_{loss} = f_{Aux}\{n_{Eng}\} \ .$$

Dementsprechend kann der vereinfachte Ansatz $P_{out} = P_{Eng}$ ersetzt werden durch

$$P_{out} = \left(M_{Eng} - M_{loss}\right) \frac{\pi}{30} n_{Eng} \eta_T^F \quad .$$

Daraus wiederum ergibt sich der entsprechend korrigierte Motordrehmomentvektor $M_{Eng}$ in Komponentenschreibweise zu

$$M_{Eng}^i \;=\; \frac{P_{out}}{\frac{\pi}{30} n_{Eng} \eta_T^F \{n_{Eng}^i, P_{out}, r_T^i\}} + M_{loss}\{n_{Eng}^i\} \quad .$$

Zur Verringerung des Rechenaufwands kann vorgesehen sein, dass die Zielmotordrehzahl $n_{Eng}^{Set}$ sowie die Zielgetriebeübersetzung $r^{Set}$ von dem Kontrollsystem als Punkteschar für ein für die momentane Getriebeausgangs-leistung $P_{out}$ vorgegebenes Intervall $\left(P_{out}^{min}, \ldots, P_{out}^{max}\right)$ berechnet und als von der momentanen Getriebeaus-gangsleistung $P_{out}$ abhängige Steuerkurve in der Speichereinheit abgelegt wird. Die Berechnung ist in diesem Fall von dem Kontrollsystem nur einmal durchzuführen und kann insbesondere werksseitig erfolgen.

Die sich je nach momentaner Getriebeausgangsleistung $P_{out}$ aus der Steuerkurve ergebende Zielmotordrehzahl $n_{Eng}^{Set}$ und/oder Zielgetriebeübersetzung $r^{Set}$ kann anschließend von dem Kontrollsystem am Verbrennungsmotor und/oder an der Getriebeeinheit selbsttätig oder gegebenenfalls nach vorheriger Bestätigung bzw. Freigabe durch den Fahrer über die Bedieneinheit eingesteuert werden.

Denkbar ist es auch, dass die Berechnung der Zielmotordrehzahl $n_{Eng}^{Set}$ sowie der Zielgetriebeübersetzung $r^{Set}$ in Form der Steuerkurve von dem Kontrollsystem stationär durchgeführt und über eine Datenkommunikationseinrichtung an die von einem mobilen Fahrzeugsystem, also beispielsweise einer Land-, Forst- oder Baumaschine, umfasste Speichereinheit übermittelt wird. Die Datenkommunikationseinrichtung kann zur Herstellung einer drahtlosen WLAN-Verbindung mit einem von dem Kontrollsystem umfassten zentralen Daten- und Rechenserver ausgebildet sein, wobei die Steuerkurve seitens des zentralen Daten- und Rechenserver bereitgestellt und in die Speichereinheit hochgeladen wird.

Das erfindungsgemäße Verfahren wird im Folgenden anhand der beigefügten Zeichnungen näher erläutert. Es zeigen:

Fig. 1     ein mobiles Fahrzeugsystem in Gestalt eines landwirtschaftlichen Traktors mit einer Vorrichtung zur Durchführung des erfindungsgemäßen Verfahrens, und

Fig. 2     ein Ausführungsbeispiel des erfindungsgemäßen Verfahrens in Gestalt eines vereinfacht dargestellten Flussdiagramms.

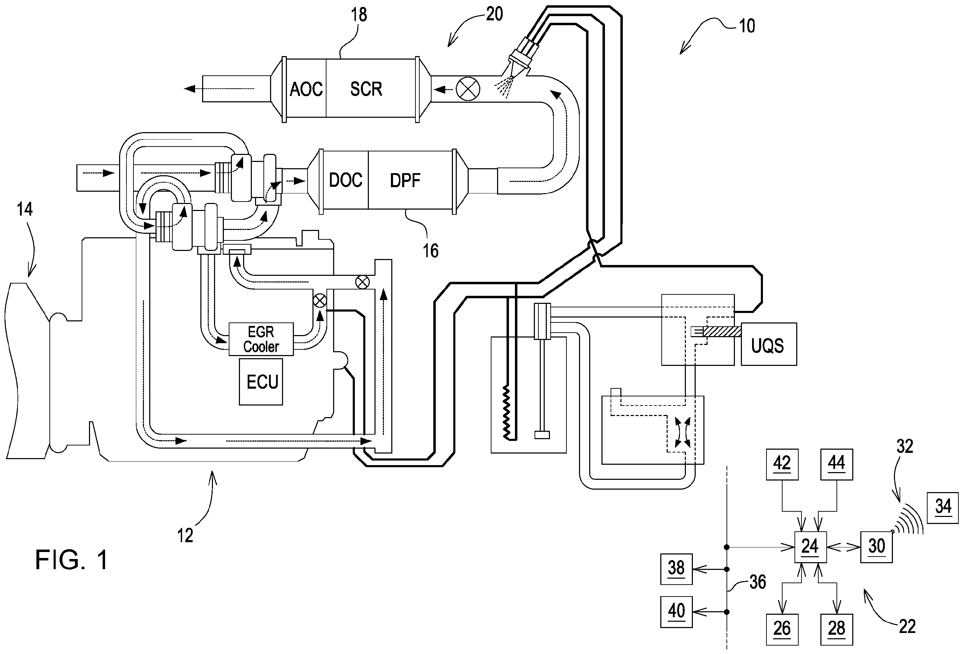

Fig. 1 zeigt ein mobiles Fahrzeugsystem in Gestalt eines schematisch dargestellten landwirtschaftlichen Traktors mit einer Vorrichtung zur Durchführung des erfindungsgemäßen Verfahrens.

Der landwirtschaftliche Traktor 10 weist einen dieselbetriebenen Verbrennungsmotor 12 sowie eine dem Verbrennungsmotor 12 nachgeschaltete Getriebeeinheit 14 auf. Bei der Getriebeeinheit 14 handelt es sich um ein stufenloses Getriebe bzw. ein Schaltgetriebe mit mindestens zwei Getriebeübersetzungen. Um den Schadstoffausstoß des Verbrennungsmotors 12 zu verringern, ist ferner eine aus einem Rußpartikelfilter 16 sowie einem SCR-Katalysator 18 bestehende Abgasnachbehandlungseinrichtung 20 vorhanden. Der SCR-Katalysator 18 dient hierbei der katalytischen Reduktion von im Abgas enthaltenen Stickoxiden. Als Reduktionsmittel wird eine in den Abgasstrom eingespritzte wässrige Harnstofflösung, beispielsweise EU 32, verwendet.

Die in dem landwirtschaftlichen Traktor 10 vorgesehene Vorrichtung 22 umfasst ein elektronisches Kontrollsystem 24, eine dieser zugeordnete Speichereinheit 26 sowie eine als berührungsempfindliche Anzeigeoberfläche ausgebildete Bedieneinheit 28. Eine Datenkommunikationseinrichtung 30 ermöglicht die Herstellung einer drahtlosen WLAN-Verbindung 32 mit einem zentralen Daten- und Rechenserver 34.

Des Weiteren steht das Kontrollsystem 24 über einen CAN-Datenbus 36 mit einem Motorsteuergerät 38 sowie einer Getriebesteuerung 40 des landwirtschaftlichen Traktors 10 in Verbindung, sodass es dem Kontrollsystem 24 möglich ist, eine fahrerunabhängige Anpassung von Motordrehzahl und Getriebeübersetzung vorzunehmen.

Ein Getriebedrehzahlsensor 42 bzw. Motordrehzahlsensor 44 dient der Erfassung einer momentanen Getrie-beausgangsdrehzahl $n_{out}$ bzw. einer momentanen Motordrehzahl $n_{Eng}$. Die von den Sensoren 42, 46 jeweils erzeugten Drehzahlsignale werden dem Kontrollsystem 24 zur Auswertung zugeführt.

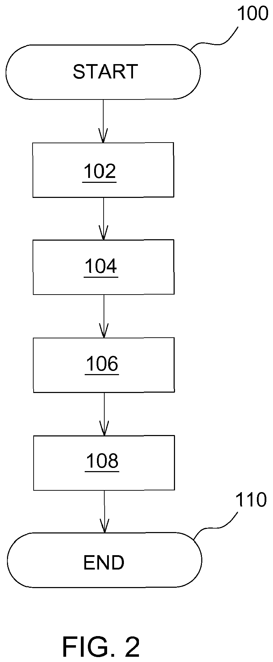

Fig. 2 zeigt ein Ausführungsbeispiel des von der Vorrichtung 22 durchgeführten erfindungsgemäßen Verfahrens in Gestalt eines vereinfacht dargestellten Flussdiagramms.

Das Verfahren wird bei Inbetriebnahme des landwirtschaftlichen Traktors 10 in einem Startschritt 100 initialisiert. Anschließend wird in einem ersten Schritt 102 der Fahrer über die von der Bedieneinheit 28 umfasste Anzeigeoberfläche aufgefordert, für den Betrieb des Verbrennungsmotors 12 eine Reduktionsmittel-Kraftstoff-Verbrauchsgewichtung $q_{FD}$ vorzugeben. Die vom Fahrer über die Bedieneinheit 28 vorgenommene Vorgabe wird dem Kontrollsystem 24 anschließend mitgeteilt.

Die Reduktionsmittel-Kraftstoff-Verbrauchsgewichtung $q_{FD}$ ist definiert als Verhältnis der Verbrauchsraten $\dot{m}_{DEF}$ und $\dot{m}_{Fuel}$ von Reduktionsmittel und Kraftstoff,

$$q_{FD} = \frac{\dot{m}_{DEF}}{\dot{m}_{Fuel}} \quad .$$

Im vorliegenden Fall werden von dem Kontrollsystem 24 im ersten Schritt 102 mehrere feste Reduktionsmittel-Kraftstoff-Verbrauchsgewichtungen $q_{FD}$ zur Auswahl über die Bedieneinheit 28 vorgegeben. Es ist eine Auswahl zwischen drei verschiedenen Werten vorgesehen:

$$q_{FD} = 0{:}1 \ , \ 1{:}1 \ , \ 1{:}3$$

Bei einer Gewichtung von *0:1* findet im Folgenden ausschließlich ein Verbrauch von Kraftstoff, nicht jedoch von Reduktionsmittel Berücksichtigung, wohingegen im Falle einer Gewichtung von *1:1* ein Verbrauch von Reduktionsmittel und Kraftstoff zu gleichen Teilen angesetzt wird. Ein Wert von *1:3* entspricht ferner einer Gewichtung, bei der ein preislich äquivalenter Verbrauch von Reduktionsmittel und Kraftstoff vorliegt, nämlich unter der gängigen Annahme, dass das Reduktionsmittel ungefähr dreimal so teuer ist wie die gleiche Menge Kraftstoff. Durch Vorgabe einer überschaubaren Anzahl fester Werte für die Reduktionsmittel-Kraftstoff-Verbrauchsgewichtung $q_{FD}$ wird die Auswahl für den Fahrer wesentlich vereinfacht. Alternativ ist bei entsprechend erfahrenen Fahrern eine freie Vorgabe über die Bedieneinheit 28 vorgesehen.

In einem auf den ersten Schritt 102 folgenden zweiten Schritt 104 wird von dem Kontrollsystem 24 ausgehend von der vorgegebenen Reduktionsmittel-Kraftstoff-Verbrauchsgewichtung $q_{FD}$ ein Vektorfeld korrespondierender Motorbetriebspunkte $(n_{Eng}^i, \ M_{Eng}^i)$ ermittelt, mit dem Ziel, für jeden der Motorbetriebspunkte $(n_{Eng}^i, \ M_{Eng}^i)$ einen spezifischen Reduktionsmittel-Kraftstoff-Verbrauch $BSFC^i$ abzuleiten,

$$BSFC^i = \frac{\dot{m}_{Fuel}^i + \dot{m}_{DEF}^i \cdot q_{FD}}{P_{out}} \quad . \tag{1}$$

Hierbei gibt $\dot{m}_{Fuel}^i$ die Kraftstoff-Verbrauchsrate und $\dot{m}_{DEF}^i$ die Reduktionsmittel-Verbrauchsrate jeweils für den i-ten Motorbetriebspunkt, $q_{FD}$ die vorgegebene Reduktionsmittel-Kraftstoff-Verbrauchsgewichtung sowie $P_{out}$ eine momentane Getriebeausgangsleistung wieder.

Zur Ermittlung des Vektorfelds wird von dem Kontrollsystem 24 im zweiten Schritt 104 zunächst für einen zulässigen Motordrehzahlbereich $\left[n_{Eng}^{min}, n_{Eng}^{max}\right]$ ein Motordrehzahlvektor $\vec{n}_{Eng}$ bestimmt.

Handelt es sich bei der Getriebeeinheit 14 um ein stufenloses Getriebe, erfolgt dies unter Annahme von N möglichen Werten für die Motordrehzahl,

$$\vec{n}_{Eng} = \left(n_{Eng}^{min}, \ n_{Eng}^{min} + \Delta n \cdot i \ , ..., \ n_{Eng}^{max}\right) \cap \Delta n = \frac{n_{Eng}^{max} - n_{Eng}^{min}}{N} \ \forall \ i = 1 ... N \quad .$$

Dies trägt dem Umstand Rechnung, dass die Beeinflussung der Motordrehzahl seitens des Motorsteuergeräts 38 im Allgemeinen nicht kontinuierlich, sondern in diskreten Drehzahlschritten erfolgt. Die Anzahl *N* bzw. Breite *Δn* der Drehzahlschritte wird dabei letztlich durch die Rechenkapazität des verwendeten Motorsteuergeräts 38 nach oben bzw.

unten hin begrenzt.

Ist hingegen ein Schaltgetriebe mit wenigstens zwei Getriebeübersetzungen vorgesehen, so wird der Motordrehzahlvektor $\vec{n}_{Eng}$ aus den zur Verfügung stehenden Getriebeübersetzungen $r_T^i$ des Schaltgetriebes abgeleitet. In Komponentenschreibweise lautet dieser für die $i$-te Getriebeübersetzung

$$n_{Eng}^i = n_{out}\, r_T^i \quad ,$$

wobei sich die momentane Getriebeausgangsdrehzahl $n_{out}$ aus den seitens des Getriebedrehzahlsensors 42 bereitgestellten Drehzahlsignalen ergibt.

Für die Ableitung der momentanen Getriebeausgangsleistung $P_{out}$ sind nun zwei unterschiedliche Vorgehensweisen vorgesehen. Ausgehend von einem vereinfachten Ansatz wird die momentane Getriebeausgangsleistung $P_{out}$ im zweiten Schritt 104 unmittelbar aus einer von dem Verbrennungsmotor 12 bereitgestellten momentanen Motorausgangsleistung $P_{Eng}$ abgeleitet,

$$P_{Out} = P_{Eng} \quad .$$

Die momentane Motorausgangsleistung $P_{Eng}$ ergibt sich hierbei zu

$$P_{Eng} = M_{Eng}\, \frac{\pi}{30}\, n_{Eng} \quad ,$$

wobei $M_{Eng}$ das momentane Motordrehmoment und $n_{Eng}$ die momentane Motordrehzahl ist. Die momentane Motordrehzahl $n_{Eng}$ wird mittels des Motordrehzahlsensors 44 ermittelt, wohingegen das momentane Motordrehmoment $M_{Eng}$ seitens des Motorsteuergeräts 38 basierend auf der Einspritzmenge zur Verfügung gestellt wird. Alternativ kann zu diesem Zweck jedoch auch ein (in Fig. 1 nicht abgebildeter) Drehmomentsensor vorgesehen sein.

Damit ergibt sich für den mit dem Motordrehzahlvektor $\vec{n}_{Eng}$ korrespondierenden Motordrehmomentvektor $\vec{M}_{Eng}$ in Komponentenschreibweise

$$M_{Eng}^i \;=\; \frac{P_{out}}{\frac{\pi}{30}\, n_{Eng}^i} \quad .$$

Um einen von Antriebskrafteinbrüchen freien Betrieb des Verbrennungsmotors 12 sicherzustellen, wird das ermittelte Vektorfeld von dem Kontrollsystem 24 im zweiten Schritt 104 bezüglich solcher Motorbetriebspunkte $(n_{Eng}^i,\ M_{Eng}^i)$, die außerhalb des Drehmomentpotentials des Verbrennungsmotors 12 liegen, bereinigt.

Ferner sind die Verbrauchsraten $\dot{m}_{DEF}$ und $\dot{m}_{Fuel}$ von Reduktionsmittel und Kraftstoff in jedem der möglichen Motorbetriebspunkte $(n_{Eng},\ M_{Eng})$ des Verbrennungsmotors 12 bekannt,

$$\dot{m}_{DEF} = f\left\{ n_{Eng},\ M_{Eng} \right\} \quad ,$$

$$\dot{m}_{Fuel} = f\left\{ n_{Eng},\ M_{Eng} \right\} \quad .$$

Diese sind in Gestalt entsprechender Tabellen in der dem Kontrollsystem 24 zugeordneten Speichereinheit 26 hinterlegt. Das Kontrollsystem 24 leitet daraus im zweiten Schritt 104 für jeden der innerhalb des bereinigten Vektorfelds liegenden Motorbetriebspunkte $(n_{Eng}^i,\ M_{Eng}^i)$ einen zugehörigen spezifischen Reduktionsmittel-Kraftstoff-Verbrauch $BSFC^i$ ab. Anschließend wird in einem auf den zweiten Schritt 104 folgenden dritten Schritt 106 von dem Kontrollsystem 24 dasjenige Element $i^{Set}$ als Zielmotorbetriebspunkt $(n_{Eng}^{Set},\ M_{Eng}^{Set})$ ausgewählt, dem ein minimaler spezifischer Reduktionsmittel-Kraftstoff-Verbrauch $BSFC^{Set}$ entspricht, wobei von dem Kontrollsystem 24 nach Maßgabe des ausgewählten Elements $i^{Set}$ eine Zielmotordrehzahl $n_{Eng}^{Set}$ sowie daraus unter Berücksichtigung einer momentanen Getriebeausgangsdrehzahl $n_{out}$ eine Zielgetriebeübersetzung $r^{Set}$ vorgegeben wird.

Die entsprechend dem minimalen spezifischen Reduktionsmittel-Kraftstoff-Verbrauch $BSFC^{Set}$ vorgegebene Zielmotordrehzahl $n_{Eng}^{Set}$ und/oder Zielgetriebeübersetzung $r^{Set}$ wird anschließend von dem Kontrollsystem 24 in einem auf den dritten Schritt 106 folgenden vierten Schritt 108 am Verbrennungsmotor 12 und/oder an der Getriebeeinheit 14 eingesteuert. Dies erfolgt selbsttätig, gegebenenfalls auch nach vorheriger Bestätigung bzw. Freigabe durch den Fahrer über die Bedieneinheit 28.

Optional wird anstelle der vereinfachenden Annahme $P_{Out} = P_{Eng}$ ein umfassenderer Ansatz verfolgt, bei dem zur genauen Bestimmung der momentanen Getriebeausgangsleistung $P_{out}$ innerhalb der Getriebeeinheit 14 auftretende Leistungsverluste berücksichtigt werden. Hierzu wird der ermittelte minimale spezifische Reduktionsmittel-Kraftstoff-Verbrauch $BSFC^{Set}$ von dem Kontrollsystem 24 in Abhängigkeit eines für die Getriebeeinheit 14 ermittelten Wirkungs-grads $\eta_T^F$ bzw. $\eta_T^R$ korrigiert, wobei sich dieser als Funktion einer momentanen Getriebeeingangsleistung $P_{in}$ bzw. der momentanen Getriebeausgangsleistung $P_{out}$ sowie der momentanen Motordrehzahl $n_{Eng}$ und der momentanen Getriebeübersetzung $r_T$ ergibt,

$$\eta_T^F = f_T^F\{n_{Eng}, P_{in}, r_T\} \ ,$$

$$\eta_T^R = f_T^R\{n_{Eng}, P_{out}, r_T\} \ .$$

Hierbei sind die Funktionen $f_T^F$ bzw. $f_T^R$ in Form entsprechender Tabellen in der dem Kontrollsystem 24 zugeordneten Speichereinheit 26 hinterlegt.

Die Genauigkeit bei der Bestimmung der momentanen Getriebeausgangsleistung $P_{out}$ lässt sich weiter erhöhen, indem der ermittelte minimale spezifische Reduktionsmittel-Kraftstoff-Verbrauch $BSFC^{Set}$ von dem Kontrollsystem 24 in Abhängigkeit eines Drehmomentanteils $M_{loss}$, der auf einen Leistungsbedarf von mittels des Verbrennungsmotors 12 angetriebenen Nebenaggregaten zurückgeht, korrigiert wird. Zu diesen Nebenaggregaten gehören unter anderem elektrische Generatoren, Hydraulikpumpen, Lüfteraggregate, und dergleichen. Der entsprechende Drehmomentanteil ist hierbei in erster Näherung eine Funktion der momentanen Motordrehzahl $n_{Eng}$,

$$M_{loss} = f_{Aux}\{n_{Eng}\} \ .$$

Dementsprechend wird der vereinfachte Ansatz $P_{out} = P_{Eng}$ ersetzt durch

$$P_{out} = \left(M_{Eng} - M_{loss}\right)\frac{\pi}{30}n_{Eng}\eta_T^F \ .$$

Daraus wiederum ergibt sich der entsprechend korrigierte Motordrehmomentvektor $\vec{M}_{Eng}$ in Komponenten-schreibweise zu

$$M_{Eng}^i = \frac{P_{out}}{\frac{\pi}{30}n_{Eng}\eta_T^F\{n_{Eng}^i, P_{out}, r_T^i\}} + M_{loss}\{n_{Eng}^i\} \ .$$

Des Weiteren wird von dem Kontrollsystem 24 im dritten Schritt 106 ein aktueller spezifischer Reduktionsmittel-Kraftstoff-Verbrauch $BSFC^C$ ermittelt. Eine Einsteuerung der Zielmotordrehzahl $n_{Eng}^{Set}$ und/oder Zielgetriebeübersetzung $r^{Set}$ im vierten Schritt 108 erfolgt hierbei nur dann, wenn das Kontrollsystem 24 feststellt, dass der aktuelle spezifische Reduktionsmittel-Kraftstoff-Verbrauch $BSFC^C$ den minimalen spezifischen Reduktionsmittel-Kraftstoff-Verbrauch $BSFC^{Set}$ um eine vorgegebene Verbrauchsdifferenz $\Delta_{BSFC}$ übersteigt,

$$BSFC^C - BSFC^{iSet} > \Delta_{BSFC} \quad,$$

mit

$$BSFC^C = \frac{\dot{m}^C_{Fuel} + \dot{m}^C_{DEF} \cdot q_{FD}}{P_{out}} \quad,$$

wobei $\dot{m}_{Fuel}$ und $\dot{m}_{DEF}$ die auf den momentanen Motorbetriebspunkt ($n_{Eng}$, $M_{Eng}$) bezogenen Verbrauchsraten von Kraftstoff und Reduktionsmittel darstellen.

Durch entsprechende Vorgabe der Verbrauchsdifferenz $\Delta_{BSFC}$ lassen sich überflüssige korrigierende Eingriffe in die Motordrehzahl bzw. die Getriebeübersetzung aufgrund lediglich geringfügiger Variationen des aktuellen spezifischen Reduktionsmittel-Kraftstoff-Verbrauchs $BSFC^C$ vermeiden. Das Verbrauchs- bzw. Betriebsverhalten des Verbrennungsmotors 12 bzw. der Getriebeeinheit 14 wird so maßgeblich verbessert.

Zusätzlich ist im dritten Schritt 106 vorgesehen, dass von dem Kontrollsystem 24 eine aktuelle Motorleistungsreserve $P^C_{Res}$ für den momentanen Motorbetriebspunkt ($n_{Eng}$, $M_{Eng}$) und eine dem Zielmotorbetriebspunkt ($n^{Set}_{Eng}$, $M^{Set}_{Eng}$) entsprechende Zielmotorleistungsreserve $P^{Set}_{Res}$ berechnet wird, wobei eine Einsteuerung der Zielmotordrehzahl $n^{Set}_{Eng}$ und/oder Zielgetriebeübersetzung $r^{Set}$ nur dann erfolgt, wenn die Zielmotorleistungsreserve $P^{Set}_{Res}$ die aktuelle Motorleistungsreserve $P^C_{Res}$ um eine vorgegebene Leistungsdifferenz $\Delta_P$ übersteigt,

$$P^{Set}_{Res} - P^C_{Res} > \Delta_P \quad,$$

mit

$$P^C_{Res} = \left( M^{Max}_{Eng}\{n_{Eng}\} - M_{Eng} \right) \frac{\pi}{30} n_{Eng} \quad,$$

$$P^{Set}_{Res} = \left( M^{Max}_{Eng}\{n^{Set}_{Eng}\} - M^{Set}_{Eng} \right) \frac{\pi}{30} n^{Set}_{Eng} \quad,$$

wobei $M^{Max}_{Eng}\{n_{Eng}\}$ bzw. $M^{Max}_{Eng}\{n^{Set}_{Eng}\}$ das maximale Drehmomentpotential des Verbrennungsmotors 12 bei der Motordrehzahl $n_{Eng}$ bzw. $n^{Set}_{Eng}$ wiedergibt.

Somit erfolgt ein korrigierender Eingriff in die Motordrehzahl bzw. die Getriebeübersetzung seitens das Kontrollsystems 24 nur dann, wenn dieser hinsichtlich der erzielbaren Leistungsausbeute zu einem merklichen Nutzen führt.

Anschließend wird das Verfahren in einem Schlussschritt 110 beendet.

Gemäß einer Abwandlung des erfindungsgemäßen Verfahrens wird zur Verringerung des Rechenaufwands im zweiten Schritt 104 die Zielmotordrehzahl $n^{Set}_{Eng}$ sowie die Zielgetriebeübersetzung $r^{Set}$ von dem Kontrollsystem 24 ausgehend von Gleichung (1) als Punkteschar für ein für die momentane Getriebeausgangsleistung $P_{out}$ vorgegebenes Intervall $(P^{min}_{out}, \ldots, P^{max}_{out})$ berechnet und als von der momentanen Getriebeausgangsleistung $P_{out}$ abhängige Steuerkurve in der Speichereinheit 26 abgelegt. Die Berechnung ist in diesem Fall von dem Kontrollsystem nur einmal durchzuführen und kann insbesondere werksseitig erfolgen.

Optional wird die Berechnung der Zielmotordrehzahl $n^{Set}_{Eng}$ sowie der Zielgetriebeübersetzung $r^{Set}$ in Form der Steuerkurve von einer stationären Recheneinheit - hier in Gestalt des von dem Kontrollsystem 24 funktionsmäßig mitumfassten zentralen Daten- und Rechenservers 26 - außerhalb des landwirtschaftlichen Traktors 10 durchgeführt und über die Datenkommunikationseinrichtung 30 an die von dem landwirtschaftlichen Traktor 10 umfasste Speichereinheit 26 übermittelt. Die Steuerkurve wird hierbei seitens des zentralen Daten- und Rechenservers 34 über die WLAN-Verbindung 32 in die Speichereinheit 26 hochgeladen.

Der übrige Verfahrensablauf bleibt unverändert, sodass insoweit auf die zugehörige Beschreibung verwiesen sei. Insbesondere wird die sich je nach momentaner Getriebeausgangsleistung $P_{out}$ aus der Steuerkurve ergebende Zielmotordrehzahl $n_{Eng}^{Set}$ und/oder Zielgetriebeübersetzung $r^{Set}$ auch hier im vierten Schritt 108 von dem Kontrollsystem am Verbrennungsmotor und/oder an der Getriebeeinheit selbsttätig oder gegebenenfalls nach vorheriger Bestätigung bzw. Freigabe durch den Fahrer über die Bedieneinheit eingesteuert.

## Patentansprüche

1. Verfahren zum Betreiben eines Verbrennungsmotors mit einer Abgasnachbehandlungseinrichtung, bei dem

   (a) in einem ersten Schritt einem Kontrollsystem (24) eine für den Betrieb des Verbrennungsmotors (12) vorgegebene Reduktionsmittel-Kraftstoff-Verbrauchsgewichtung $q_{FD}$ mitgeteilt wird, wobei die Reduktionsmittel-Kraftstoff-Verbrauchsgewichtung $q_{FD}$ über eine mit dem Kontrollsystem (24) kommunizierende Bedieneinheit (28) vorgegeben wird,
   (b) in einem zweiten Schritt von dem Kontrollsystem (24) ausgehend von der vorgegebenen Reduktionsmittel-Kraftstoff-Verbrauchsgewichtung $q_{FD}$ ein Vektorfeld korrespondierender Motorbetriebspunkte $\left(n_{Eng}^{i},\ M_{Eng}^{i}\right)$ ermittelt wird, um für jeden der Motorbetriebspunkte $\left(n_{Eng}^{i},\ M_{Eng}^{i}\right)$ einen spezifischen Reduktionsmittel-Kraftstoff-Verbrauch $BSFC^{i}$ abzuleiten,

$$BSFC^{i} = \frac{\dot{m}_{Fuel}^{i} + \dot{m}_{DEF}^{i} \cdot q_{FD}}{P_{out}}\ ,$$

   wobei $\dot{m}_{Fuel}^{i}$ die Kraftstoff-Verbrauchsrate und $\dot{m}_{DEF}^{i}$ die Reduktionsmittel-Verbrauchsrate jeweils für den i-ten Motorbetriebspunkt, $q_{FD}$ die vorgegebene Reduktionsmittel-Kraftstoff-Verbrauchsgewichtung sowie $P_{out}$ eine momentane Getriebeausgangsleistung wiedergibt, und
   (c) in einem dritten Schritt von dem Kontrollsystem (24) aus dem ermittelten Vektorfeld dasjenige Element $i^{Set}$ als Zielmotorbetriebspunkt $\left(n_{Eng}^{Set},\ M_{Eng}^{Set}\right)$ ausgewählt wird, dem ein minimaler spezifischer Reduktionsmittel-Kraftstoff-Verbrauch $BSFC^{Set}$ entspricht, wobei von dem Kontrollsystem (24) nach Maßgabe des ausgewählten Elements $i^{Set}$ eine Zielmotordrehzahl $n_{Eng}^{Set}$ sowie daraus unter Berücksichtigung einer momentanen Getriebeausgangsdrehzahl $n_{out}$ eine Zielgetriebeübersetzung $r^{Set}$ vorgegeben wird.

2. Verfahren nach Anspruch 1, **dadurch gekennzeichnet, dass** von dem Kontrollsystem (24) mehrere feste Reduktionsmittel-Kraftstoff-Verbrauchsgewichtungen $q_{FD}$ zur Auswahl über die Bedieneinheit (28) vorgegeben werden.

3. Verfahren nach Anspruch 1 oder 2, **dadurch gekennzeichnet, dass** die entsprechend dem minimalen spezifischen Reduktionsmittel-Kraftstoff-Verbrauch $BSFC^{Set}$ vorgegebene Zielmotordrehzahl $nEng$ und/oder Zielgetriebeübersetzung $r^{Set}$ von dem Kontrollsystem (24) am Verbrennungsmotor (12) und/oder an der Getriebeeinheit (14) eingesteuert wird.

4. Verfahren nach wenigstens einem der Ansprüche 1 bis 3, **dadurch gekennzeichnet, dass** das Vektorfeld von dem Kontrollsystem (24) bezüglich solcher Motorbetriebspunkte $\left(n_{Eng}^{i},\ M_{Eng}^{i}\right)$, die außerhalb des Drehmomentpotentials des Verbrennungsmotors (12) liegen, bereinigt wird, wobei die Auswahl des dem minimalen spezifischen Reduktionsmittel-Kraftstoff-Verbrauch $BSFC^{Set}$ entsprechenden Elements $i^{Set}$ von dem Kontrollsystem (24) auf Grundlage des bereinigten Vektorfelds durchgeführt wird.

5. Verfahren nach wenigstens einem der Ansprüche 1 bis 4, **dadurch gekennzeichnet, dass** von dem Kontrollsystem (24) ein aktueller spezifischer Reduktionsmittel-Kraftstoff-Verbrauch $BSFC^C$ ermittelt wird, wobei eine Einsteuerung der Zielmotordrehzahl $n_{Eng}^{Set}$ und/oder Zielgetriebeübersetzung $r^{Set}$ nur dann erfolgt, wenn das Kontrollsystem (24) feststellt, dass der aktuelle spezifische Reduktionsmittel-Kraftstoff-Verbrauch $BSFC^C$ den minimalen spezifischen Reduktionsmittel-Kraftstoff-Verbrauch $BSFC^{Set}$ um eine vorgegebene Verbrauchsdifferenz $\Delta_{BSFC}$ übersteigt.

6. Verfahren nach wenigstens einem der Ansprüche 1 bis 5, **dadurch gekennzeichnet, dass** von dem Kontrollsystem (24) eine aktuelle Motorleistungsreserve $P_{Res}^C$ für den momentanen Motorbetriebspunkt ($n_{Eng}$, $M_{Eng}$) und eine dem Zielmotorbetriebspunkt $(n_{Eng}^{Set}, M_{Eng}^{Set})$ entsprechende Zielmotorleistungsreserve $P_{Res}^{Set}$ berechnet wird, wobei eine Einsteuerung der Zielmotordrehzahl $n_{Eng}^{Set}$ und/oder Zielgetriebeübersetzung $r^{Set}$ nur dann erfolgt, wenn die Zielmotorleistungsreserve $P_{Res}^{Set}$ die aktuelle Motorleistungsreserve $P_{Res}^C$ um eine vorgegebene Leistungsdifferenz $\Delta_P$ übersteigt.

7. Verfahren nach wenigstens einem der Ansprüche 1 bis 6, **dadurch gekennzeichnet, dass** der ermittelte minimale spezifische Reduktionsmittel-Kraftstoff-Verbrauch $BSFC^{Set}$ von dem Kontrollsystem (24) in Abhängigkeit eines für die Getriebeeinheit (14) ermittelten Wirkungsgrads $\eta_T^F$, $n_T^R$ korrigiert wird.

8. Verfahren nach wenigstens einem der Ansprüche 1 bis 7, **dadurch gekennzeichnet, dass** der ermittelte minimale spezifische Reduktionsmittel-Kraftstoff-Verbrauch $BSFC^{Set}$ von dem Kontrollsystem (24) in Abhängigkeit eines Drehmomentanteils $M_{loss}$, der auf einen Leistungsbedarf von mittels des Verbrennungsmotors (12) angetriebenen Nebenaggregaten zurückgeht, korrigiert wird.

9. Verfahren nach Anspruch 1, **dadurch gekennzeichnet, dass** die Zielmotordrehzahl $n_{Eng}^{Set}$ sowie die Zielgetriebeübersetzung $r^{Set}$ von dem Kontrollsystem (24) als Punkteschar für ein für die momentane Getriebeausgangsleistung $P_{out}$ vorgegebenes Intervall $(P_{out}^{min}, \ldots, P_{out}^{max})$ berechnet und als von der momentanen Getriebeausgangsleistung $P_{out}$ abhängige Steuerkurve in der Speichereinheit (26) abgelegt wird.

10. Verfahren nach Anspruch 9, **dadurch gekennzeichnet, dass** die sich je nach momentaner Getriebeausgangsleistung $P_{out}$ aus der Steuerkurve ergebende Zielmotordrehzahl $n_{Eng}^{Set}$ und/oder Zielgetriebeübersetzung $r^{Set}$ von dem Kontrollsystem (24) am Verbrennungsmotor (12) und/oder an der Getriebeeinheit (14) eingesteuert wird.

11. Verfahren nach Anspruch 9 oder 10, **dadurch gekennzeichnet, dass** die Berechnung der Zielmotordrehzahl $n_{Eng}^{Set}$ sowie der Zielgetriebeübersetzung $r^{Set}$ in Form der Steuerkurve von einer von dem Kontrollsystem (24) umfassten Recheneinheit stationär durchgeführt und über eine Datenkommunikationseinrichtung (30) an die von einem mobilen Fahrzeugsystem (10) umfasste Speichereinheit (26) übermittelt wird.

**Claims**

1. Method for operating an internal combustion engine with an exhaust gas aftertreatment device, wherein

    (a) in a first step a reducing agent-fuel consumption weighting $q_{FD}$ to be maintained during the operation of the internal combustion engine (12) is communicated to a control system (24), wherein the reducing agent-fuel consumption weighting $q_{FD}$ is specified by means of an operator's control unit (28) communicating with the control system (24),

    (b) in a second step a vector field of corresponding engine operating points ($n_{Eng}^i$, $M_{Eng}^i$) is determined by the control system (24) based on the predetermined reducing agent-fuel consumption weighting $q_{FD}$ in order to derive a specific reducing agent-fuel consumption $BSFC^i$ for each of the engine operating points $(n_{Eng}^i, M_{Eng}^i)$,

$$BSFC^i = \frac{\dot{m}_{Fuel}^i + \dot{m}_{DEF}^i \cdot q_{FD}}{P_{out}},$$

wherein $\dot{m}_{Fuel}^i$ represents the fuel consumption rate and $\dot{m}_{DEF}^i$ represents the reducing agent consumption rate for the ith engine operating point, $q_{FD}$ represents the predetermined reducing agent-fuel consumption weighting and $P_{out}$ represents a current gearbox output power, and

(c) in a third step the control system (24) selects the element $i^{Set}$ from the identified vector field to which a minimum specific reducing agent-fuel consumption $BSFC^{Set}$ corresponds as the setpoint engine operating point $(n_{Eng}^{Set}, M_{Eng}^{Set})$, wherein a setpoint engine speed $n_{Eng}^{Set}$ is specified by the control system (24) based on the selected element $i^{Set}$ and from it a setpoint gear ratio $r^{Set}$ is specified while taking into account a current gearbox output speed $n_{out}$.

2. Method according to Claim 1, **characterized in that** the control system (24) specifies a plurality of fixed reducing agent-fuel consumption weightings $q_{FD}$ for selection by means of the operator's control unit (28).

3. Method according to Claim 1 or 2, **characterized in that** the setpoint engine speed $n_{Eng}^{Set}$ and/or the setpoint gear ratio $r^{Set}$ specified in accordance with the minimum specific reducing agent-fuel consumption $BSFC^{Set}$ is/are controlled by the control system (24) in the internal combustion engine (12) and/or in the gearbox unit (14).

4. Method according to at least one of Claims 1 to 3, **characterized in that** the vector field is adjusted by the control system (24) regarding those engine operating points $(n_{Eng}^i, M_{Eng}^i)$ that lie outside the torque potential of the internal combustion engine (12), wherein the selection of the element $i^{Set}$ corresponding to the minimum specific reducing agent-fuel consumption $BSFC^{Set}$ is carried out by the control system (24) based on the adjusted vector field.

5. Method according to at least one of Claims 1 to 4, **characterized in that** a current specific reducing agent fuel-consumption $BSFC^C$ is determined by the control system (24), wherein control of the setpoint engine speed $n_{Eng}^{Set}$ and/or the setpoint gear ratio $r^{Set}$ is only carried out if the control system (24) determines that the current specific reducing agent-fuel consumption $BSFC^C$ exceeds the minimum specific reducing agent-fuel consumption $BSFC^{Set}$ by a predetermined difference in consumption $\Delta_{BSFC}$.

6. Method according to at least one of Claims 1 to 5, **characterized in that** the control system (24) calculates a current engine power reserve $P_{Res}^C$ for the current engine operating point $(n_{Eng}, M_{Eng})$ and a setpoint engine power reserve $P_{Res}^{Set}$ corresponding to the setpoint engine operating point $(n_{Eng}^{Set}, M_{Eng}^{Set})$, wherein control of the setpoint engine speed $n_{Eng}^{Set}$ and/or the setpoint gear ratio $r^{Set}$ is only carried out if the setpoint engine power reserve $P_{Res}^{Set}$ exceeds the current engine power reserve $P_{Res}^C$ by a predetermined power difference $\Delta p$.

7. Method according to at least one of Claims 1 to 6, **characterized in that** the determined minimum specific reducing agent-fuel consumption $BSFC^{Set}$ is corrected by the control system (24) as a function of an efficiency $\eta_T^F$, $\eta_T^R$ determined for the gearbox unit (14).

8. Method according to at least one of Claims 1 to 7, **characterized in that** the determined minimum specific reducing agent-fuel consumption $BSFC^{Set}$ is corrected by the control system (24) as a function of a torque component $M_{loss}$ due to a power demand of auxiliary units powered by the internal combustion engine (12).

9. Method according to Claim 1, **characterized in that** the setpoint engine speed $n_{Eng}^{Set}$ as well as the setpoint gear ratio $r^{Set}$ are calculated by the control system (24) as a set of points for an interval $(P_{out}^{min}, \ldots, P_{out}^{max})$ specified for the current gearbox output power $P_{out}$ and are stored in the memory unit (26) as a control curve as a function of the current gearbox output power $P_{out}$.

10. Method according to Claim 9, **characterized in that** the setpoint engine speed $n_{Eng}^{Set}$ and/or the setpoint gear ratio $r^{Set}$ resulting from the control curve as a function of the current gearbox output power $P_{out}$ are controlled by the control system (24) in the internal combustion engine (12) and/or in the gearbox unit (14).

11. Method according to Claim 9 or 10, **characterized in that** the calculation of the setpoint engine speed $n_{Eng}^{Set}$ as well as the setpoint gear ratio $r^{Set}$ in the form of the control curve is carried out statically by a computational unit contained in the control system (24) and is transmitted via a data communication device (30) to the memory unit (26) contained in a mobile vehicle system (10).

**Revendications**

1. Procédé de fonctionnement d'un moteur à combustion interne muni d'un dispositif de post-traitement de gaz d'échappement, procédé dans lequel

(a) dans une première étape, un système de commande (24) est informé d'une pondération de consommation de carburant et d'agent réducteur $q_{FD}$ qui est spécifiée pour le fonctionnement du moteur à combustion interne (12), la pondération de consommation de carburant et d'agent réducteur $q_{FD}$ étant spécifiée par le biais d'une unité de commande (28) communiquant avec le système de commande (24),
(b) dans une deuxième étape, le système de commande (24) détermine sur la base de la pondération de consommation de carburant et d'agent réducteur spécifiée $q_{FD}$ un champ de vecteurs de points de fonctionnement de moteur correspondants $(n_{Eng}^i, \; M_{Eng}^i)$ afin de déduire pour chacun des points de fonctionnement de moteur $(n_{Eng}^i, \; M_{Eng}^i)$ la consommation de carburant et d'agent réducteur spécifique $BSFC^i$,

$$BSFC^i = \frac{\dot{m}_{Fuel}^i + \dot{m}_{DEF}^i \cdot q_{FD}}{P_{out}}$$

$\dot{m}_{Fuel}^i$ étant le taux de consommation de carburant et $\dot{m}_{DEF}^i$ étant le taux de consommation d'agent réducteur à chaque fois pour le i-ème point de fonctionnement de moteur, $q_{FD}$ étant la pondération de consommation de carburant et d'agent réducteur spécifiée et $P_{out}$ étant la puissance de sortie de transmission instantanée, et
(c) dans une troisième étape, le système de commande (24) sélectionne dans le champ de vecteurs déterminé l'élément $i^{Set}$ comme point de fonctionnement de moteur cible $(n_{Eng}^{Set}, \; M_{Eng}^{Set})$ auquel correspond une consommation de carburant et d'agent réducteur spécifique minimale $BSFC^{Set}$, le système de commande (24) spécifiant une vitesse de rotation de moteur cible $n_{Eng}^{Set}$ conformément à l'élément $i^{Set}$ sélectionné et à partir de là un rapport de transmission cible $r^{Set}$ en tenant compte d'une vitesse de rotation de sortie de transmission instantanée $n_{out}$.

2. Procédé selon la revendication 1, **caractérisé en ce que** le système de commande (24) spécifie une pluralité de pondérations de consommation de carburant et d'agent réducteur fixe $q_{FD}$ pour une sélection par le biais de l'unité de commande (28).

**3.** Procédé selon la revendication 1 ou 2, **caractérisé en ce que** le système de commande (24) commande, au niveau du moteur à combustion interne (12) et/ou de l'unité de transmission (14), la vitesse de rotation de moteur cible $n_{Eng}^{Set}$ et/ou le rapport de transmission cible $r^{Set}$ spécifiés en fonction de la consommation de carburant et d'agent réducteur spécifique minimale $BSFC^{Set}$.

**4.** Procédé selon l'une au moins des revendications 1 à 3, **caractérisé en ce que** le système de commande (24) nettoie le champ de vecteurs des points de fonctionnement de moteur $(n_{Eng}^{i}, \ M_{Eng}^{i})$ qui sont situés à l'extérieur du potentiel de couple du moteur à combustion interne (12), la sélection de l'élément $i^{Set}$ correspondant à la consommation de carburant et d'agent réducteur spécifique minimale $BSFC^{Set}$ étant effectuée par le système de commande (24) sur la base du champ de vecteurs nettoyés.

**5.** Procédé selon l'une au moins des revendications 1 à 4, **caractérisé en ce que** le système de commande (24) détermine une consommation de carburant et d'agent réducteur spécifique actuelle $BSFC^{C}$, la vitesse de rotation de moteur cible $n_{Eng}^{Set}$ et/ou le rapport de transmission cible $r^{Set}$ n'étant commandés que si le système de commande (24) détermine que la consommation de carburant et d'agent réducteur spécifique actuelle $BSFC^{C}$ dépasse la consommation de carburant et d'agent réducteur spécifique minimale $BSFC^{Set}$ d'une différence de consommation spécifiée $\Delta_{BSFC}$.

**6.** Procédé selon l'une au moins des revendications 1 à 5, **caractérisé en ce que** le système de commande (24) calcule une réserve de puissance moteur actuelle $P_{Res}^{C}$ pour le point de fonctionnement de moteur instantané $(n_{Eng}, M_{Eng})$ et une réserve de puissance moteur cible $P_{Res}^{Set}$ correspondant au point de fonctionnement de moteur cible $(n_{Eng}^{Set}, \ M_{Eng}^{Set})$, la vitesse de rotation de moteur cible $n_{Eng}^{Set}$ et/ou le rapport de transmission cible $r^{Set}$ n'étant commandés que si la réserve de puissance moteur cible $P_{Res}^{Set}$ dépasse la réserve de puissance moteur actuelle $P_{Res}^{C}$ d'une différence de puissance $\Delta_{P}$ spécifiée.

**7.** Procédé selon l'une au moins des revendications 1 à 6, **caractérisé en ce que** le système de commande (24) corrige la consommation de carburant et d'agent réducteur spécifique minimale $BSFC^{Set}$ déterminée en fonction d'un rendement $\eta_{T}^{F}$, $\eta_{T}^{R}$ déterminé pour l'unité de transmission (14).

**8.** Procédé selon l'une au moins des revendications 1 à 7, **caractérisé en ce que** le système de commande (24) corrige la consommation de carburant et d'agent réducteur spécifique minimale $BSFC^{Set}$ déterminée en fonction d'une proportion de couple $M_{loss}$ qui est attribuée à un besoin de puissance d'unités auxiliaires entraînées au moyen du moteur à combustion interne (12).

**9.** Procédé selon la revendication 1, **caractérisé en ce que** le système de commande (24) calcule la vitesse de rotation de moteur cible $n_{Eng}^{Set}$ et le rapport de transmission cible $r^{Set}$ sous la forme d'une famille de points pour un intervalle $(P_{Out}^{min}, \ ..., P_{Out}^{max})$ spécifié pour la puissance de sortie de transmission instantanée $P_{out}$ et les mémorise sous la forme d'une courbe de commande dépendant de la puissance de sortie de transmission instantanée $P_{out}$ dans l'unité de mémorisation (26).

**10.** Procédé selon la revendication 9, **caractérisé en ce que** le système de commande (24) commande, au niveau du moteur à combustion interne (12) et/ou de l'unité de transmission (14), la vitesse de rotation de moteur cible $n_{Eng}^{Set}$ et/ou le rapport de transmission cible $r^{Set}$ obtenus de la courbe de commande en fonction de la puissance de sortie de transmission instantanée $P_{out}$.

**11.** Procédé selon la revendication 9 ou 10, **caractérisé en ce que** le calcul de la vitesse de rotation de moteur cible $n_{Eng}^{Set}$ et le rapport de transmission cible $r^{Set}$ est effectué de manière stationnaire sous la forme de la courbe de commande par une unité de calcul constituée par le système de commande (24) et est transmis par le biais d'un dispositif de communication de données (30) à l'unité de mémorisation (26) incluse dans un système de véhicule mobile (10).

FIG. 1

100

START

102

104

106

108

110

END

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3106638 A1
- US 7063642 B1

- US 2013152549 A1